# EUROPÄISCHE PATENTANMELDUNG

(11) **EP 2 000 967 A1**
(43) Veröffentlichungstag der Anmeldung: **10.12.2008**
(21) Anmeldenummer: 07011314.7
(22) Anmeldetag: 08.06.2007
(51) Int. Cl.: G06Q 30/00

(54) **Verkaufs- und/oder Präsentationssystem**

(71) Anmelder: Advertools GmbH, 37073 Göttingen (DE)
(72) Erfinder: Volland Peter, 37085 Göttingen (DE)
(74) Vertreter: Rehberg Hüppe + Partner

(57) **Zusammenfassung**

Die Erfindung betrifft ein Verkaufs- und/oder Präsentationssystem, insbesondere für eine Verkaufsabteilung von Fernsehgeräten in einem Warenhaus.

Erfindungsgemäß sind mehrere Bildschirme (2-11) unterschiedlichen Gruppen (12; 13; 14; 34) zugeordnet. Mehrere Quellgeräte (26-29), beispielsweise ein DVD-Spieler, ein HD-DVD-Spieler, ein Videospieler, erzeugen ein Bildsignal. Über eine Verteileinrichtung (35) können die vorgenannten Bildsignale selektiv und umschaltbar automatisiert oder nach Maßgabe eines Benutzers den Gruppen (12; 13; 14; 34) zugeführt werden. Erfindungsgemäß ist damit ermöglicht, dass einzelne Gruppen (12; 13; 14; 34) in Teilbetriebsbereichen beispielsweise Werbung darstellen, während bei Interesse eines Kunden umgeschaltet wird auf die Wiedergabe eines Bildsignals, insbesondere eines Filmes. Weiterhin können an Bildschirmen einer Gruppe unterschiedliche Bildsignale der Quellgeräte (26-29) mit unterschiedlichen Formaten und/oder Qualitäten und Auflösungen dargestellt werden.

## Beschreibung

### TECHNISCHES GEBIET DER ERFINDUNG

Die Erfindung betrifft ein Verkaufs- und/oder Präsentationssystem, welches in einem Warenhaus oder einer anderweitigen Präsentationseinrichtung für Waren und/oder Dienstleistungen einsetzbar ist bzw. eingesetzt ist, in dem bzw. der eine Vielzahl von Bildschirmen zu Präsentationszwecken und/oder zum Verkauf vorhanden ist.

### STAND DER TECHNIK

In Fernseher-Abteilungen von Warnhäusern werden frei stehend oder in Regalen Bildschirme unterschiedlicher Bauart angeboten. Ständig oder auf Wunsch eines Kunden kann auf einzelnen oder sämtlichen Bildschirmen ein Testsignal dargestellt werden, auf Grundlage dessen der Kunde eine Wiedergabequalität des Bildschirmes beurteilen soll und letztlich seine Kaufentscheidung fällen soll. Bei dem Testsignal handelt es sich üblicherweise um ein Fernsehsignal, Videosignal, DVD-Signal oder HD-DVD-Signal, welches dem jeweiligen Bildschirm von einem Quellgerät, beispielsweise einer Satellitenschüssel, einem Antennen-Anschluss, einem DVD-Spieler oder einem HD-DVD-Spieler zur Verfügung gestellt wird. Hierbei kann ein einzelnes Quellgerät mehrere Bildschirme mit einem Videosignal versorgen.

Ein ähnlicher Aufbau findet Einsatz für Präsentationseinrichtungen, in denen auf mehreren Bildschirmen gleiche oder unterschiedliche Videosignale für einen Betrachter präsentiert werden, beispielsweise für eine Werbung, zur Unterhaltung oder für künstlerische Darbietungen.

### AUFGABE DER ERFINDUNG

Der vorliegenden Erfindung liegt die Aufgabe zugrunde, ein Verkaufs- und/oder Präsentationssystem vorzuschlagen, welches hinsichtlich
- einer Verarbeitung und Verteilung eines Videosignales von Quellgeräten,
- der Vielseitigkeit,
- der Nutzbarkeit von Videosignalen und/oder Quellgeräten unterschiedlicher Bildqualitäten,
- der Anschließbarkeit von Bildschirmen mit unterschiedlichen Bildqualitäten,
- den Beeinflussungsmöglichkeiten durch Verkaufs- oder Präsentationspersonal oder einen Kunden oder Betrachter,
- einer Zentralisierbarkeit maßgeblicher Bauelemente,
- einer Strukturierbarkeit des Aufbaus und/oder
- den Informationsmöglichkeiten und der Informationsvielfalt für den Kunden oder Betrachter
verbessert ist.

### LÖSUNG

Die Aufgabe der Erfindung wird erfindungsgemäß mit den Merkmalen des unabhängigen Patentanspruchs 1 gelöst. Weitere Ausgestaltungen des erfindungsgemäßen Verkaufs- und/oder Präsentationssystems ergeben sich entsprechend den abhängigen Patentansprüchen 2 bis 16.

Die Erfindung findet Einsatz bei einem Verkaufs- und/oder Präsentationssystem in einem Warenhaus, beispielsweise einer Abteilung für oder mit Fernsehgeräten, oder einer Präsentationseinrichtung, beispielsweise einem Show-Room, einem "Flagship-Store", für mehrere mit Bildschirmen gebildete Werbetafeln oder für eine künstlerische Einrichtung. Zwecks Vereinfachung wird im Folgenden lediglich auf eine Abteilung für Fernseher in einem Warenhaus eingegangen, ohne dass die vorliegende Erfindung auf einen derartigen Anwendungsbereich eingeschränkt sein soll.

In einer Abteilung für Fernseher sind erfindungsgemäß mehrere vorhandene Bildschirme unterschiedlichen Gruppen zugeordnet. Für eine Gruppenzuordnung können beispielsweise die folgenden alternativen oder kumulativen Kriterien einschlägig sein:
- Die Gruppen können entsprechend dem Standort der Bildschirme gebildet sein. Beispielsweise können in einem Regalsystem benachbarte Bildschirme einer Gruppe zugeordnet sein. Ebenfalls möglich ist, dass Bildschirme, die von einem beabsichtigten Standort eines Kunden einen vorgegebenen maximalen Abstand besitzen, einer Gruppe zugeordnet sind.
- Ebenfalls denkbar ist eine Aufteilung der Gruppen je nach Höhe des Bildschirmes, beispielsweise in unterschiedlichen Regalfächern.
- Weiterhin kann eine Aufteilung der Gruppen nach Größe der Bildschirme oder vorzugsweise nach Art oder Qualität des Bildschirmes erfolgen. Denkbar ist hierbei die Unterteilung von Gruppen mit Bildschirmen, welche als Flachbildschirme ausgebildet sind, sowie Gruppen mit nicht als Flachbildschirme ausgebildeten Bildschirmen. Für die Unterteilung der Bildschirme in Gruppen mit unterschiedlichen Bildqualitäten können die Gruppen je nach Wiedergabe-Qualität, beispielsweise HDMI, DVI, Scart, VGA und ähnlichem gebildet sein.

Somit erfolgt durch die Einteilung mehrerer Bildschirme in einzelne Gruppen eine Art "Clusterung" der Bildschirme. Hierbei ist es durchaus möglich, dass in mindestens einer erfindungsgemäßen Gruppe auch lediglich ein Bildschirm, insbesondere ein Fernsehgerät, eingruppiert ist.

Weiterhin sind erfindungsgemäß mehrere Quellgeräte vorgesehen. Die Quellgeräte dienen einer Ausgabe von Bildsignalen, Mediasignalen oder kombinierten Ton- und Bildsignalen (im Folgenden gemeinsam als "Bildsignale" angesprochen). Bei derartigen Bildsignalen handelt es sich um ruhende oder bewegte Bilder. Insbesondere handelt es sich um einen Film, welcher auf einem oder mehreren Bildschirmen einer Gruppe wiedergegeben werden soll. Hierbei können die mehreren Quellgeräte Bildsignale derselben Qualität erzeugen. Beispielsweise können die mehreren Quellgeräte sämtlich als DVD-Spieler oder aber als HD-DVD-Spieler ausgebildet sein, wobei allerdings in den einzelnen Quellgeräten unterschiedliche DVDs bzw. HD-DVDs eingesetzt sind. Ebenfalls umfasst von der Erfindung ist die Ausgestaltung der mehreren Quellgeräte derart, dass Bildsignale unterschiedlicher Qualitäten erzeugt werden können. Beispielsweise handelt es sich bei einem Quellgerät um einen herkömmlichen Videorekorder, beispielsweise in VHS-Format, bei einem Quellgerät um einen DVD-Spieler sowie bei einem Quellgerät um einen HD-DVD-Spieler. Hierbei können in den unterschiedlichen Quellgeräten gleiche oder unterschiedliche Filme abgespielt werden, wodurch derselbe Film mit Bildsignalen unterschiedlicher Ausgabequalität von den Quellgeräten ausgegeben wird.

Erfindungsgemäß ist mindestens eine Verteileinrichtung vorgesehen, über die die Bildsignale, die von den Quellgeräten erzeugt worden sind, selektiv den vorgenannten Gruppen der Bildschirme zuführbar sind. Hierbei wird unter der selektiven Zuführbarkeit verstanden, dass mit der Verteileinrichtung insbesondere ein Bildsignal auswählbar einer ersten Gruppe oder aber einer zweiten Gruppe (oder aber auch einer ersten und zweiten Gruppe) zuführbar ist, wobei der zuvor erläuterte Grundsatz selbstverständlich auch auf mehr als zwei Gruppen erweiterbar ist. Die selektive Zuordnung kann hierbei manuell durch einen Benutzer, beispielsweise durch ein Verkaufs- oder Präsentationspersonal oder durch einen Kunden oder Betrachter, erfolgen und/oder automatisiert mit einer vorgegebenen Abfolge oder entsprechend erfassten Zuständen des Verkaufs- oder Präsentationssystems oder des Betrachters oder Kunden oder entsprechend weiterer Parameter.

Weiterhin führt die erfindungsgemäße Verteileinrichtung nicht nur ein Bildsignal einer Gruppe von Bildschirmen zu. Vielmehr ist die Verteileinrichtung in der Lage, u. U. gleichzeitig mehrere Gruppen von Bildschirmen aus einem oder mehreren Quellgeräten mit unterschiedlichen Bildsignalen zu speisen.

Erfindungsgemäß kommuniziert mit der mindestens einen Verteileinrichtung mindestens eine Regeleinheit oder Bedieneinehit. Über diese ist die Verteileinrichtung derart ansteuerbar, dass die Zuführung der Bildsignale von mindestens einem Quellgerät zu einer Gruppe der Bildschirme auf eine alternative oder kumulative Zuführung zu einer anderen Gruppe der Bildschirme veränderbar ist. Bei Einsatz einer Bedieneinheit entsprechen einer ersten Ausführungsform kann ein Benutzer, beispielsweise ein Verkaufspersonal, ein Präsentationspersonal, ein Betrachter oder Kunde, über diese gezielt auf die Verteilereinrichtung einwirken. Alternativ oder zusätzlich kann die Regeleinheit automatisiert auf die Verteileinrichtung einwirken unter Berücksichtigung von Betriebsparametern oder weiterer Zustandsgrößen. Beispielsweise kann eine Beaufschlagung der Verteileinrichtung zeitgesteuert erfolgen, so dass nach vorgegebenen Zeitintervallen die Zuordnung der Bildsignale zu den Gruppen der Bildschirme verändert wird.

Die durch die erfindungsgemäße Ausgestaltung ermöglichten vorteilhaften Betriebsweisen lassen sich wie folgt beispielhaft darstellen:

Betritt ein Kunde eine Fernsehabteilung eines Warenhauses, können sämtliche Bildschirme mit einem Quellgerät verbunden sein, so dass sämtliche Bildschirme dasselbe Bildsignal empfangen. Hierdurch ergibt sich ein einheitliches Erscheinungsbild, wobei der Kunde die Bildschirme unmittelbar vergleichen kann, da sämtliche Bildschirme im Wesentlichen dasselbe Bildsignal erhalten. Interessiert sich ein Kunde näher für einen einzelnen Bildschirm, kann der Kunde oder ein Verkaufspersonal diesen Bildschirm bzw. die zugeordnete Gruppe unter Aktivierung der Verteileinrichtung über die Bedieneinheit mit einem abweichenden Bildsignal von einem anderen Quellgerät versorgen. Beispielsweise kann der Verkäufer unterschiedliche Motive an demselben Bildschirm darstellen, insbesondere eine Tag- und Nachtszene, eine Talkshow, einen Spielfilm oder einen Naturfilm. Alternativ oder kumulativ ist es möglich, dass der Verkäufer an demselben Bildschirm, an welchem der Kunde interessiert ist, die Wiedergabequalität für Bildsignale unterschiedlicher Qualitäten von unterschiedlichen Quellgeräten, beispielsweise von einem Antennensignal, einem DVD-Spieler und einem HD-DVD-Spieler veranschaulicht. Dieser Ausgestaltungsmöglichkeit liegt die Erkenntnis zugrunde, dass gemäß dem Stand der Technik einem Kunden an einem hochauflösendem Bildschirm mit einem hochauflösendem Bildsignal eine hohe Qualität eines Bildschirms "vorgegaukelt" wird, während sich für einen Kunden nach Kauf des Bildschirmes im Heimbereich, wo zumindest zeitweise ein Bildsignal verminderter Qualität vorliegen kann, eine deutlich verschlechterte Wiedergabequalität vorliegt, was zu einer Unzufriedenheit des Kunden führen kann.

Entsprechend einer weiteren Ausgestaltungsform der Erfindung ist zwischen einem Quellgerät und einer Gruppe von Bildschirmen ein Bildsignal abgezweigt, welches über eine Leitung einer Previeweinrichtung zugeführt wird. Über die Previeweinrichtung kann von einem Bedienpersonal, beispielsweise auch entfernt von den Bildschirmen und/oder den Quellgeräten, eine Kontrolle durchgeführt werden, welches Bildsignal gerade von einem Quellgerät geliefert wird und/oder an einer Gruppe von Bildschirmen angezeigt wird. Beispielsweise kann eine Abzweigung eines derartigen Bildsignals über einen sogenannten "Splitter" erfolgen, der aus einem einzigen eingehenden Bildsignal mindestens zwei Bildsignale erzeugt, von denen ein Bildsignal der Previeweinrichtung zugeführt wird, während das andere Bildsignal letztendlich einer Gruppe der Bildschirme zugeführt wird.

Für den Fall, dass das Signal über einen Splitter abgezweigt wird, der zwischen dem Quellgerät und der Verteileinrichtung angeordnet ist, kann über die Previeweinrichtung das von einem Quellgerät gelieferte Signal kontrolliert werden, bevor dieses über eine entsprechende Verstellung der Verteileinrichtung an die Gruppe der Bildschirme weitergegeben wird. Hierdurch ergeben sich somit verbesserte Kontrollmöglichkeiten für eine Gewährleistung, dass an der Vielzahl von Bildschirmen tatsächlich die gewünschten Bildsignale angezeigt werden.

Vorzugsweise ist bei dem erfindungsgemäßen Verkaufs- und/oder Präsentationssystem eine CPU vorgesehen. Über die CPU ist ein Betriebsmode eines oder mehrerer Bildschirme(s) umschaltbar. Beispielsweise kann über eine derartige CPU morgens ein zentralisiertes Anschalten der Bildschirme erfolgen, während abends die Bildschirme über die CPU zentralisiert abgeschaltet werden können. Ebenfalls denkbar ist, dass über die CPU eine Umschaltung des Bildschirms derart erfolgt, dass wahlweise
- der Bildschirm den Eingang verwendet, an dem das von der Verteileinrichtung stammende Bildsignal anliegt, sowie
- einen weiteren Eingang verwendet, der mit einem weiteren Quellgerät, beispielsweise einem Antennenanschluss, einem Videogerät oder einem DVD-Abspielgerät oder HD-DVD-Abspielgerät, verbunden ist.

Ebenfalls möglich ist die Veränderung von Bildschirmwiedergabeparametern wir Helligkeit, Kontrast oder die Beeinflussung einer Lautstärke durch die CPU. Erfindungsgemäß kann die CPU mit mehreren, räumlich verteilten Teil-CPUs ausgebildet sein oder mit einer zentralen CPU, die beispielsweise im Bereich der Quellgeräte, einem zentralen Ort hinsichtlich der Bildschirme oder vorzugsweise im Bereich der Verteileinrichtung angeordnet sein kann.

Für den Fall, dass eine besonders einfache Umschaltung eines Betriebsmodes eines oder mehrerer Bildschirme erfolgen soll, für die auch zusätzliche Leitungsverbindungen entfallen können, steuert die vorgenannte CPU eine Sendebox, beispielsweise eine IR-Sendebox, an, welche mit dem mindestens einen Bildschirm, insbesondere dem TV-Gerät, kommuniziert. Im einfachsten

Fall kann über eine geeignete Software der CPU eine Fernbedienung für den Bildschirm adaptiert werden, indem die Fernbedienung von der Software "angelernt" wird und insbesondere eine Sendefrequenz und eine Zuordnung der einzelnen Schalter der Fernbedienung zu Funktionen der Fernbedienung angelernt wird.

Gemäß einem weiteren Vorschlag der Erfindung kann eine Bedieneinheit, die mit der Verteileinrichtung kommuniziert, als Fernbedienung ausgebildet sein. Hierdurch kann es für einen Verkäufer von einer beliebigen Position in der Verkaufsabteilung, beispielsweise in der Nähe einer Gruppe von Bildschirmen, ermöglicht werden, auf die Verteileinrichtung einzuwirken, insbesondere um an einen Bildschirm ein gewünschtes Bildsignal dargestellt zu bekommen.

Gemäß einem besonderen Vorschlag der Erfindung werden an unterschiedlichen Quellgeräten Bildsignale in unterschiedlichen Ausgabeformaten und/oder Ausgabequalitäten erzeugt. Im Fall unterschiedlicher Ausgabequalitäten können durch die erfindungsgemäße Ausgestaltung an einer Gruppe von Bildschirmen oder einem Bildschirm einer derartigen Gruppe Bildsignale unterschiedlicher Qualitäten durch Umschaltung der Verteileinrichtung dargestellt werden. Erzeugen die Quellgeräte Bildsignale mit unterschiedlichen Ausgabeformaten, so können diese für den Fall, dass die Bildschirme diese unterschiedlichen Ausgabeformate gleichermaßen verarbeiten können, über die Verteileinrichtung selektiv an die Gruppen der Bildschirme weitergeleitet werden. Sind hingegen die Bildschirme und/oder die Verteileinrichtung lediglich für die Verarbeitung eines spezifischen Ausgabeformats geeignet, kann in die Übertragungskette des Bildsignals, insbesondere vor die Verteileinrichtung, eine Umwandlungseinheit zwischengeschaltet sein, die ein von einem Quellgerät erzeugtes unerwünschtes Ausgabeformat geeignet in ein von einem Bildschirm verarbeitetes Ausgabeformat umwandelt.

Während es sich bei einem Quellgerät beispielsweise um einen DVD-Spieler, ein Video-Abspielgerät, ein HD-DVD-Gerät oder ähnliches handelt kann, ist gemäß einem weiteren Vorschlag der Erfindung mindestens ein Quellgerät mit einer CPU ausgebildet, welche mit einem Speicherelement, beispielsweise einer Festplatte, einem Datenträger, einer CD oder DVD und/oder einem flüchtigen Speicher ausgebildet sein kann, ausgestattet, auf dem Bilddaten abgelegt sind. Bei derartigen Bilddaten kann es sich beispielsweise um eine Werbung handeln. Insbesondere sind die Bilddaten als bewegte oder stehende Bilder, als Text oder ähnliches ausgebildet, die im Zuge einer Werbung eingesetzt werden können. Erfindungsgemäß können derartige Bilddaten zwecks Bewerbung in dem Verkaufs- und/oder Präsentationssystem temporär als Bildsignale auch sämtlichen Bildschirmen oder lediglich einzelnen Gruppen der Bildschirme zugeführt werden. Ist hingegen ein Kunde an der Prüfung der Darstellung eines Bildsignals, insbesondere eines Films, an der Gruppe der Bildschirme interessiert, kann eine Umschaltung über die Verteileinrichtung derart erfolgen, dass an der Gruppe der Bildschirme nicht mehr die Bilddaten, insbesondere die Werbung, angezeigt werden, sondern ein Bildsignal, welches von einem anderen Quellgerät geliefert wird.

Hinsichtlich einer Aktualisierung von Betriebsdaten und/oder der Betriebsformen des Quellgerätes mit einer CPU schlägt die Erfindung ergänzend vor, dass das Quellgerät mit einem Server verbunden ist. Über einen derartigen Server kann eine Interaktion mit dem Quellgerät erfolgen, wobei auch von einem einzigen Server auf unterschiedliche Quellgeräte, beispielsweise in einem Netzwerk, zwecks Aktualisierung und/oder Koordination zugegriffen werden kann.

Eine erweiterte Wartungs- und Aktualisierungsmöglichkeit ist gegeben, wenn der Server oder das mit der CPU ausgebildete Quellgerät in ein Netzwerk eingebunden ist.

Für den Fall, dass mehrere Quellgeräte denselben Signalgegenstand, beispielsweise denselben Film, betreffende Bildsignale erzeugen, wobei die Bildsignale der einzelnen Quellgeräte allerdings unterschiedliche Qualitäten aufweisen, kann über eine Veränderung der Zuführung der unterschiedlichen Bildsignale unterschiedlicher Qualitäten zu einer Gruppe der Bildschirme an dieser Gruppe der Bildschirme ein Vergleich der Wiedergabequalität für unterschiedliche Eingangssignale erfolgen.

Verbesserte Vergleichsmöglichkeiten ergeben sich für den erfindungsgemäßen Vorschlag, dass die Quellgeräte, die denselben Signalgegenstand betreffende Bildsignale erzeugen, insbesondere denselben Film in unterschiedlichen Qualitäten abspielen, miteinander synchronisiert sind. Hierbei kann eine Synchronisierung derart erfolgen, dass die Bildsignale gleichzeitig starten, so dass mit einer Umschaltung durch die Verteileinrichtung ein Signalgegenstand oder Film durchgängig, aber mit unterschiedlichen Qualitäten an unterschiedlichen Bildschirmen analysiert werden kann. Ebenfalls möglich ist, dass die mehreren Quellgeräte denselben Signalgegenstand betreffende Bildsignale zeitlich versetzt zueinander abspielen, so dass mit der Umschaltung sukzessive dieselbe Bildsignalpassage in unterschiedlichen Qualitäten analysiert werden kann.

Für eine Weiterbildung des erfindungsgemäßen Verkaufs- und/oder Präsentationssystems ist mindestens eine Bedieneinheit im Bereich eines Bildschirms oder der Gruppe der Bildschirme angeordnet. Hierbei kann es sich um eine zentrale Bedieneinheit für mehrere Bildschirme handeln oder eine einzelne Bedieneinheit, die einem einzelnen Bildschirm zugeordnet ist. Befindet sich ein Kunde im Bereich des Bildschirms, kann dieser über die Bedieneinheit auf die Verteileinrichtung einwirken, um das auf dem Bildschirm wiedergegebene Bildsignal zu verändern.

Für einen besonderen Vorschlag der Erfindung ist im Bereich eines Bildschirmes oder einer Gruppe der Bildschirme ein Erfassungsorgan angeordnet. Das Erfassungsorgan dient einer Erfassung einer Annäherung eines Kundens an den Bildschirm oder die Gruppe der Bildschirme. Beispielsweise kann das Erfassungsorgan als Bewegungsmelder ausgebildet sein, welcher die Bewegung des Kunden im Bereich des Bildschirmes oder der Gruppe der Bildschirme erfasst. Ebenfalls möglich ist, dass das Erfassungsorgan als eine Art Lichtschranke ausgebildet ist, so dass mit dem Betreten eines bestimmten Bereiches einer Verkaufsabteilung ein Signal erzeugt wird, welches darüber Aufschluss gibt, dass sich der Kunde einer speziellen Gruppe von Bildschirmen annähert. In der Verteileinrichtung erfolgt unter Berücksichtigung des Signals des Erfassungsorgans eine Veränderung der Versorgung einer Gruppe der Bildschirme von einem Quellgerät auf eine Versorgung dieser Gruppe der Bildschirme von einem anderen Quellgerät. Beispielsweise kann grundsätzlich an einer Gruppe der Bildschirme eine Werbung angezeigt werden. Signalisiert das Erfassungsorgan allerdings, dass sich ein Kunde der Gruppe der Bildschirme annähert, kann eine Umschaltung derart erfolgen, dass an der Gruppe der Bildschirme ein Bildsignal dargestellt wird, auf dessen Grundlage sich der Kunde einen realitätsnahen Eindruck über die Qualität und die Eigenschaften des Bildschirmes bzw. der Gruppe der Bildschirme verschaffen kann.

Gemäß einem weiteren Vorschlag der Erfindung ist die Verteileinrichtung als sogenannte HDMI-Matrix ausgebildet, welche über mehrere Eingänge, beispielsweise über vier Eingänge, ein HDMI-Signal zugeführt wird und über welche selektiv und u. U. gleichzeitig diese vier Eingänge mit vier Ausgängen mit HDMI-Format verbunden werden können.

Eine weitere Lösung der der Erfindung zugrunde liegenden Aufgabe ist durch Einsatz eines Netzwerks mit mehreren Gruppen mehrerer Bildschirme, mehreren Quellgeräten und einer Verteileinrichtung für ein Verkaufs- und/oder Präsentationssystem in einem Warenhaus oder einer Präsentationseinrichtung gegeben.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erfindungsgemäßes Verkaufs- und/oder Präsentationssystem in schematischer Darstellung.
- **Fig. 2**: zeigt ein weiteres erfindungsgemäßes Verkaufs- und/oder Präsentationssystem in schematischer Darstellung mit gegenüber Fig. 1 erhöhtem Detaillierungsgrad.

### FIGURENBESCHREIBUNG

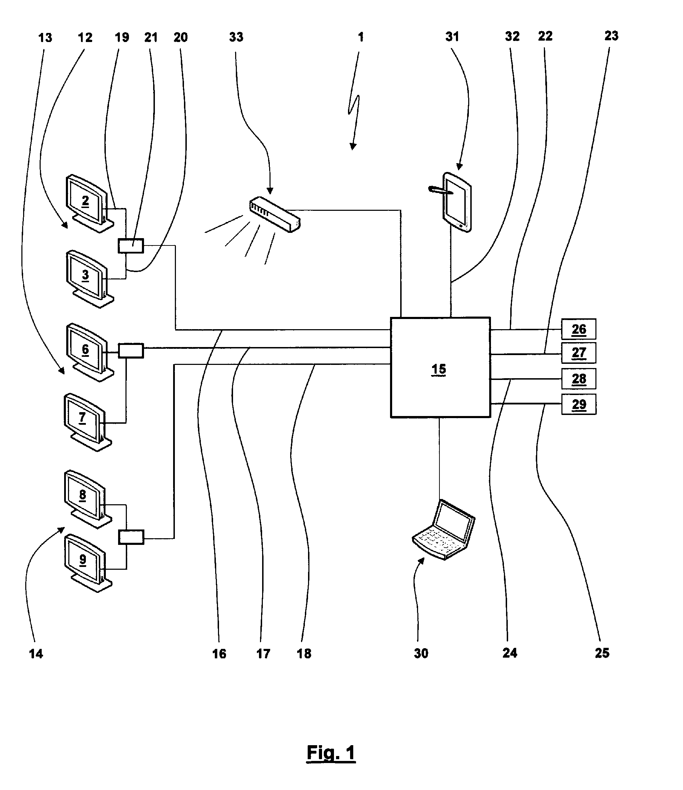

**Fig. 1** zeigt ein Präsentationssystem und/oder Verkaufssystem 1, welches beispielsweise Einsatz findet zum Präsentieren und Verkaufen von als Bildschirme 2-11 bzw. Fernsehgeräte ausgebildeten Artikeln in einem Warenhaus. Entsprechend zugeordneten Eigenschaften bilden die Bildschirme 2, 3 eine Gruppe 12, die Bildschirme 6, 7 eine Gruppe 13 und die Bildschirme 8, 9 eine Gruppe 14. Die Bildschirme 2, 3 (6, 7; 8, 9) einer Gruppe 12 (13; 14) werden aus einer Verarbeitungseinheit 15 über jeweils eine Ausgangsleitung 16 (18; 18) mit einem Bildsignal versorgt. Eine Aufteilung der Ausgangsleitung 18 (17; 18) auf den jeweiligen Bildschirmen 2, 3 (6, 7; 8, 9) zugeordnete Leitungen 19, 20 erfolgt über mindestens einen Splitter 21, welcher das Bildsignal in der Ausgangsleitung 16 zu zwei Bildsignalen in den Leitungen 19, 20 transformiert, die jeweils einem Bildschirm 2, 3 zugeführt werden können.

Die Verarbeitungseinheit 15 erhält über Eingangsleitungen 22, 23, 24, 25 Bildsignale von Quellgeräten 26, 27, 28, 29. Bei den Quellgeräten 26-29 handelt es sich um gleiche oder unterschiedliche Geräte. Beispielsweise können die Quellgeräte 26-29 als DVD-Abspielgerät, HD-DVD-Abspielgerät, TV-Eingang oder ähnliches ausgebildet sein.

Die Verarbeitungseinheit 15 ermöglicht eine selektive Zuordnung mindestens einer der Eingangsleitungen 22-25 zu mindestens einer der Ausgangsleitungen 16-18. Hierbei kann die Bearbeitungseinheit 15 Bildsignale hinsichtlich Qualität und/oder Format unverändert durchleiten oder aber durch geeignete zusätzliche Bauelemente Qualität und/oder Format der Bildsignale verändern.

Im Folgenden sind beispielhafte Betriebszustände der Verarbeitungseinheit 15 dargestellte:
- Verbindung der Eingangsleitung 22 mit sämtlichen Ausgangsleitungen 16, 17 und 18,
- Verbindung der Eingangsleitung 22 mit den Ausgangsleitungen 16, 17 bei gleichzeitiger Verbindung der Eingangsleitung 23 mit der Ausgangsleitung 18,
- Verbindung der Eingangsleitung 22 mit Ausgangsleitung 16, der Eingangsleitung 23 mit Ausgangsleitung 17 und der Eingangsleitung 24 mit Ausgangsleitung 18,
- Verbindung der Eingangsleitung 25 mit den Ausgangsleitungen 16-18,
- Verbindung der Eingangsleitung 25 mit der Ausgangsleitung 16, der Eingangsleitung 24 mit der Ausgangsleitung 17 und der Eingangsleitung 23 mit der Ausgangsleitung 18.

Beliebige andere Verbindungsmöglichkeiten sind ebenfalls möglich. Das Verkaufssystem 1 besitzt weiterhin eine Previeweinrichtung 30, welcher ein Bildsignal einer Ausgangsleitung 16-18 und/oder ein Bildsignal einer Eingangsleitung 22-25 zuführbar ist.

Des Weiteren besitzt das Verkaufssystem 1 eine Bedieneinheit 31, die drahtlos oder über eine Leitung 32 mit der Verarbeitungseinheit 15 verbunden ist und über die mittels manueller Eingabe des Benutzers an der Bedieneinheit 31 der Betriebszustand der Verarbeitungseinheit 15, insbesondere der Verbindungszustand der Eingangsleitungen 22-25 und Ausgangsleitungen 16-18, veränderbar ist.

Darüber hinaus ist ein Sendeorgan 33 vorgesehen, welches insbesondere als IR-Sendebox ausgebildet ist. Über das Sendeorgan 33 können die Betriebszustände der Bildschirme 2-11 verändert werden. Insbesondere können die Bildschirme an- und abgeschaltet werden. Alternativ oder kumulativ kann über das Sendeorgan 33 mindestens ein Bildschirm 2 derart umgeschaltet werden, dass nicht ein Bildsignal einer Leitung 19, 20 dargestellt wird, welches der Verarbeitungseinheit 15 entstammt, sondern vielmehr ein separater Eingang, beispielsweise für ein Antennensignal, genutzt wird.

Das Sendeorgan 33 wird geeignet über eine CPU angesteuert, die beispielsweise in der Verarbeitungseinheit 15 angeordnet sein kann. Durchaus möglich ist auch, dass ein Anlernen derart erfolgt, dass die für die Bildschirme 2-11 eingesetzten IR-Signale der den Bildschirmen 2-11 zugeordneten Fernbedienungen erfasst werden, so dass mittels des Sendeorgans 33 die Fernbedienungen simuliert werden können.

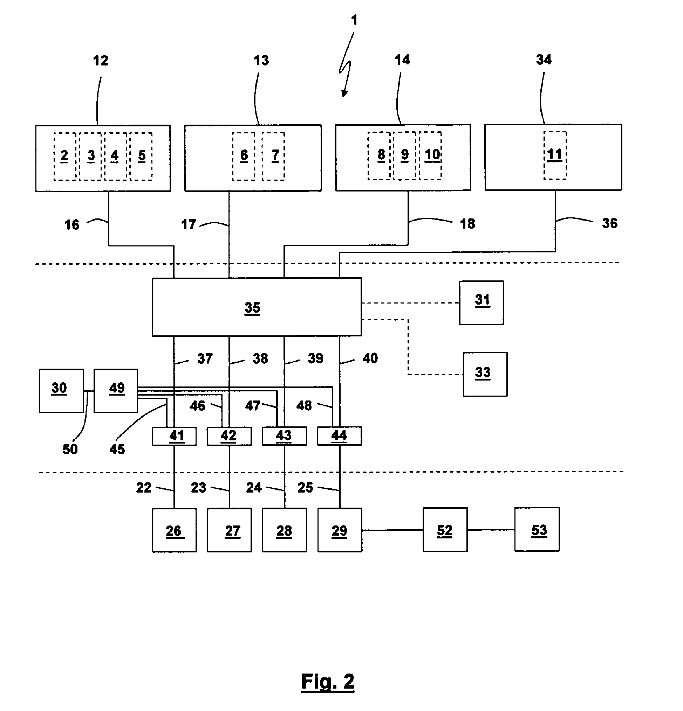

Für das in **Fig. 2** dargestellte Ausführungsbeispiel ist zusätzlich zu den Gruppen 12-14 eine vierte Gruppe 34 dargestellt, wobei im Rahmen der Erfindung auch eine größere oder kleinere Anzahl von Gruppen Einsatz finden kann. In der Gruppe 12 sind in diesem Fall vier Bildschirme 2, 3, 4, 5 eingruppiert, während in der Gruppe 13 zwei Bildschirme 6, 7 und in der Gruppe 14 drei Bildschirme 8, 9, 10 eingruppiert sind. In der Gruppe 34 ist lediglich ein Bildschirm 11 eingruppiert.

Bei ansonsten im Wesentlichen Fig. 1 entsprechender Ausgestaltung ist die Verarbeitungseinheit 15 mit einer Verteileinrichtung 35 ausgebildet. Die Verteileinrichtung 35 besitzt neben den Ausgangsleitungen 16-18 eine weitere Ausgangsleitung 36. Die Verteileinrichtung 35 besitzt Eingänge 37, 38, 39, 40. Die Verteileinrichtung 35 ermöglicht eine selektive Verbindung der Eingänge 37-40 mit den Ausgangsleitungen 16, 17, 18, 36, wie dieses im Wesentlichen auch für die Verarbeitungseinheit 15 in Fig. 1 beschrieben worden ist. Zwischen die Eingänge 37-40 und die Eingangsleitungen 22-25 ist jeweils ein Splitter 41, 42, 43, 44 zwischengeschaltet. Der Splitter 41 (42; 43; 44) besitzt einen jeweils mit einer Eingangsleitung 22 (23; 24; 25) verbundenen Eingang sowie zwei Ausgänge, von denen jeweils ein Ausgang mit einem Eingang 37 (38; 39; 40) der Verteileinrichtung 35 verbunden ist. Der andere Ausgang ist jeweils über eine Previewleitung 45, 46, 47, 48 mit einem Switcher 49 verbunden, welcher je nach Wahl des Benutzers, insbesondere über die Bedieneinheit 31 oder weitere Bedienelemente, eine der Previewleitungen 45-48 mit einer Leitung 50 verbindet. Über die Leitung 50 wird ein Bildsignal, welches mit einem der in den Leitungen 22-25 geführten Bildsignale korreliert oder übereinstimmt, der Previeweinrichtung 30, insbesondere einem Bildschirm, zugeführt.

Für das in Fig. 2 dargestellte Ausführungsbeispiel ist das Quellgerät 29 als PC ausgebildet, auf dem Daten abgelegt sind, insbesondere eine Werbung in Form einer Schrift, eines Bildes, eines Filmes oder einer Animation. Das Quellgerät 29 ist mit einem Server 52 verbunden, über welchen ein Betrieb des Quellgerätes 29 gesteuert werden kann und/oder eine Aktualisierung des Datenbestandes des Quellgerätes 29 vorgenommen werden kann. Über den Server 52 können weitere, in Fig. 2 nicht dargestellte Quellgeräte angesteuert oder aktualisiert werden, wobei hier unterschiedliche Ansteuerungen oder Datenbestände möglich sind oder aber eine synchronisierte Ansteuerung und/oder Aktualisierung, so dass mit dem Server 52 verbundene Quellgeräte eine gleiche Funktionsweise und -abläufe und/oder gleiche Bilddaten aufweisen. Der Server 52 kann an ein internes oder öffentliches Netzwerk 53 (Internet) angebunden sein.

Während in Fig. 2 eine Verteileinrichtung 35 mit vier Ein- und Ausgängen dargestellt ist, kann eine Verteileinrichtung 35 mit einer größeren Zahl von Eingängen und/oder Ausgängen zum Einsatz kommen, so dass mehr als vier Gruppen 12, 13, 14, 34 durch die Verteileinrichtung 35 angesteuert werden können. Ebenfalls denkbar ist der kumulative Einsatz mehrerer Verteileinrichtungen 35. Bei Einsatz mehrerer Splitter 21 kann - je nach Bedarf in dem Warenhaus oder einer Präsentationseinrichtung - eine Aufteilung der Bildsignale der Ausgangsleitungen 16-18, 36 auf mehr als die dargestellten Bildschirme erfolgen. Neben den in den Figuren dargestellten Bauelementen können ergänzende Bauelemente in dem Verkaufs- und/oder Präsentationssystem vorgesehen sein, beispielsweise CPU-Einheiten, welche einzelnen dargestellten Baueinheiten zugeordnet sind oder zentralisiert für mehrere Baueinheiten zuständig sind und eine Automatisierung unterschiedlicher Betriebszustände der Baueinheiten und des gesamten Verkaufssystems 1 ermöglichen. Ebenfalls möglich sind Baueinheiten, welche eine Transformation der Bildsignale ermöglichen hinsichtlich des Formates und/oder der Qualität.

Gemäß einer besonderen Ausführungsform ist die Verteileinrichtung 35 als sog. "HDMI-Matrix" ausgebildet, beispielsweise als 4X4-HDMI-Matrix. Demgemäß erzeugen die Quellgeräte 26-29 Bildsignale in HDMI-Format oder die Ausgabesignale der Quellgeräte 26-29 werden über geeignete Einrichtungen in ein HDMI-Format umgewandelt. Für diese Ausgestaltung wird über die Ausgangsleitungen 16-18, 36 ebenfalls ein HDMI-Format übertragen, welches von den Bildschirmen 2-11 in den Gruppen 12-14, 34 unmittelbar verarbeitet werden kann oder unter Zwischenschaltung eines zusätzlichen Bauelementes in ein geeignetes Format umgewandelt werden kann.

Für eine besondere Ausführungsform spielen die Quellgeräte 26, 27, 28 Filmmaterial ab, vorzugsweise in unterschiedlichen Qualitäten, Auflösungen und/oder Formaten. Hingegen ist das Quellgerät 29 auf das Abspielen von Werbematerial ausgerichtet, welches im Folgenden auch als Werbesignal als Sonderform eines Bildsignals bezeichnet ist. Hierbei kann es sich um eine Grafik, um Textdaten, eine Animation, ein stehendes Bild oder ähnliches handeln, wobei vorzugsweise mit dem Werbesignal für den Einsatz einer HDMI-Matrix ebenfalls ein HDMI-Signal erzeugt wird. Für diese Ausführungsform verwenden also die Quellgeräte 26-28 Daten, welche von einer TV-, Video- oder Filmanstalt zur Verfügung gestellt werden, während die von dem Quellgerät 29 verwendeten Daten von dem Betreiber des Verkaufs- oder Präsentationssystems oder einer von diesem beauftragten Werbeagentur erstellt worden sind. Ebenfalls denkbar ist allerdings, dass mehrerer Quellgeräte 26 als CPUs oder PCs ausgebildet sind, auf welchem Bildsignale für einen oder mehrere Filme abgelegt sind, was mit gleichen oder unterschiedlichen Qualitäten und/oder Formaten erfolgen kann. Für den Fall, dass ein Bildsignale hochauflösend bereitgestellt wird, kann in dem System 1 ein sogenanntes "Scaling" erfolgen, womit künstlich ein schlechteres, mit einem niedriger auflösenden Format korrelierendes Signal erzeugt wird und welches dann an eine der Gruppen 12, 13, 14, 34 weitergegeben wird. Dies kann dazu dienen, auch an einem hochauflösenden Bildschirm ein Bildsignal mit verminderter Qualität bereitzustellen und/oder um für den Fall einer Bereitstellung eines hochauflösenden Bildsignals durch ein Quellgerät, aber Einsatz eines Bildschirme mit einer niedrigeren Auflösung die geeignete Beaufschlagung dieses Bildschirmes zu simulieren.

Bei den genannten Bildsignalen handelt es sich insbesondere um Multimedia-Signale. Die Verarbeitungseinheit 15 gemäß Fig. 1 ist in Fig. 2 mit der Verteileinrichtung 35, dem Switcher 49 und den Splittern 41, 42, 43 und 44 ausgebildet.

Während in den Figuren Leitungsverbindungen zwischen den einzelnen Bauelementen des Netzwerkes dargestellt sind, kann eine Übertragung der Bildsignale ebenfalls zwischen einzelnen oder sämtlichen Bauelementen drahtlos erfolgen.

Beispielsweise kann hierzu eine Ultrabreitbandtechnik eingesetzt werden, welche noch unter dem Stichwort "UWB" zusammengefasst ist und insbesondere eine drahtlose Übertragung von HD-Video- und Audiosignalen ermöglichen kann. Hierbei kann ein trägerloser Pulsfunk benutzt werden, bei dem die Amplitude, der Abstand und/oder die Phase der einzelnen Pulse moduliert ist. Fehlt einem kontinuierlichen Pulsstrom ein Puls, weil seine Amplitude ausbleibt oder geringer ist (Amplitudenmodulation) oder seine Phase nicht an der erwarteten Position liegt bzw. seine Eingangsflanke invertiert wurde (Phasenmodulation), zeigt dies einen Bitwechsel an. Ist die maximale Sendeleistung bei normalen Funkübertragungen auf ein möglichst schmales Frequenzspektrum konzentriert, wird die Leistung bei UWB über ein möglichst breites Band verteilt und die Leistungsdichte unter den Rauschpegel üblicher Sender reduziert, so dass UWB-Sender ungestört von anderen Funkfrequenzen arbeiten respektive andere Sender ungestört lassen und nur wenig Strom pro Kanalkapazität benötigen.

Vorzugsweise erfolgt der Einsatz einer Frequenz im Bereich von 3,4 bis 4,8 GHz oder zwischen 6 bis 8,5 GHz mit einer spektralen Leistungsdichte von maximal -41,3 dBm/MHz, wobei sich der Pulsfunk mindestens über ein Band von 50 MHz erstrecken muss. Für Bereiche von 4,8 bis 6 GHz und 8,5 bis 10,6 GHz gelten etwas niedrigere Grenzwerte, insbesondere -70 bzw. -65 dB/MHz. Für die vorgenannten absoluten Angaben sind auch Abweichungen von bis zu 10%, insbesondere 5% oder 2% nach oben oder unten möglich. Möglich ist auch, dass eine Puls-Übertragungseinrichtung, beispielsweise ein Sender und/oder ein Empfänger, zumindest teilweise in eine Verteileinrichtung 35 oder HDMI-Matrix integriert ist. Zum Einsatz kommen kann weiterhin ein ISO-Standart 26907 "Orthogonal Frequency Division Multiplex" (OFDM), wobei auch der Funkstandard WLAN 802.11a/h (5-GHz-WLAN) zum Einsatz kommen kann. Zum Einsatz kommen können ferner Technologien, welche als "wireless HDMI", "wireless HD", "WHDI" bekannt sind.

Ebenfalls denkbar ist als Quellgerät oder für die durch einen PC bereitgestellten Bilddaten ein Datenformat, welches mit einer BLU-Ray-Disc korreliert oder dieser entsammt.

### BEZUGSZEICHENLISTE

- 1: Verkaufssystem
- 2: Bildschirm
- 3: Bildschirm
- 4: Bildschirm
- 5: Bildschirm
- 6: Bildschirm
- 7: Bildschirm
- 8: Bildschirm
- 9: Bildschirm
- 10: Bildschirm
- 11: Bildschirm
- 12: Gruppe
- 13: Gruppe
- 14: Gruppe
- 15: Verarbeitungseinheit
- 16: Ausgangsleitung
- 17: Ausgangsleitung
- 18: Ausgangsleitung
- 19: Leitung
- 20: Leitung
- 21: Splitter
- 22: Eingangsleitung
- 23: Eingangsleitung
- 24: Eingangsleitung
- 25: Eingangsleitung
- 26: Quellgerät
- 27: Quellgerät
- 28: Quellgerät
- 29: Quellgerät
- 30: Previeweinrichtung
- 31: Bedieneinheit
- 32: Leitung
- 33: Sendeorgan
- 34: Gruppe
- 35: Verteileinrichtung
- 36: Ausgangsleitung
- 37: Eingang
- 38: Eingang
- 39: Eingang
- 40: Eingang
- 41: Splitter
- 42: Splitter
- 43: Splitter
- 44: Splitter
- 45: Previewleitung
- 46: Previewleitung
- 47: Previewleitung
- 48: Previewleitung
- 49: Switcher
- 50: Leitung
- 51:
- 52: Server
- 53: Netzwerk
- 54:
- 55:
- 56:
- 57:
- 58:
- 59:
- 60:

## Patentansprüche

1. Verkaufs- und/oder Präsentationssystem (1) für Waren und/oder Dienstleistungen in einem Warenhaus oder einer Präsentationseinrichtung
a) mit mehreren Bildschirmen (2-11), wobei
b) mehrere Bildschirme (2-11) unterschiedlichen Gruppen (12, 13, 14, 34) zugeordnet sind,
c) mehrere Quellgeräten (26-29) vorgesehen sind, die einer Ausgabe von Bildsignalen dienen,
d) mindestens eine Verteileinrichtung (35) vorgesehen ist, über die die Bildsignale der Quellgeräte (26-29) selektiv den Gruppen (12, 13, 14, 34) der Bildschirme (2 - 11) zuführbar sind,
e) über die mindestens eine Verteileinrichtung (35) gleichzeitig Bildsignale unterschiedlicher Quellgeräte (26-29) unterschiedlichen Gruppen (12, 13, 14, 34) der Bildschirme (2 - 11) zuführbar sind oder zugeführt werden,
f) mindestens eine mit der Verteileinrichtung (35) kommunizierende Regeleinheit oder Bedieneinheit (31) vorgesehen ist, über die die Zuführung der Bildsignale von mindestens einem Quellgerät (26 - 29) zu einer Gruppe (12) der Bildschirme auf eine alternative oder kumulative Zuführung zu einer anderen Gruppe (13; 14; 34) der Bildschirme veränderbar ist.

2. Verkaufs- und/oder Präsentationssystem (1) nach Anspruch 1, **dadurch gekennzeichnet, dass** zwischen einem Quellgerät (26; 27; 28; 29) und einer Gruppe (12; 13; 14; 34) von Bildschirmen ein Bildsignal abgezweigt ist, welches über eine Leitung (50) einer Previeweinrichtung (30) zugeführt wird.

3. Verkaufs- und/oder Präsentationssystem (1) nach Anspruch 2, **dadurch gekennzeichnet, dass** das Signal über einen Splitter (41; 42; 43; 44) abgezweigt wird, welcher zwischen dem Quellgerät (26; 27; 28; 29) und der Verteileinrichtung (35) angeordnet ist.

4. Verkaufs- und/oder Präsentationssystem (1) nach einem der Ansprüche 1 bis 3, **dadurch gekennzeichnet, dass** eine CPU vorgesehen ist, über welche ein Betriebsmode eines oder mehrerer Bildschirme(s) (2 - 11) umschaltbar ist.

5. Verkaufs- und/oder Präsentationssystem (1) nach Anspruch 4, **dadurch gekennzeichnet, dass** die CPU ein Sendeorgan (33) ansteuert, welches mit mindestens einem Bildschirm (2 - 11) kommuniziert.

6. Verkaufs- und/oder Präsentationssystem (1) nach einem der vorhergehenden Ansprüche, **dadurch gekennzeichnet, dass** mindestens eine Bedieneinheit (31) als Fernbedienung ausgebildet ist.

7. Verkaufs- und Präsentationssystem (1) nach einem der vorhergehenden Ansprüche, **dadurch gekennzeichnet, dass** die Quellgeräte (26 - 29) Bildsignale in unterschiedlichen Ausgabeformaten und/oder Ausgabequalitäten, insbesondere ein DVD-Signal, HD-DVD-Signal, ein TV-Antennen-Signal, ein HDMI-Signal, ein DVI-I- oder DVD-D-Signal und/oder ein SCART-Signal, erzeugen.

8. Verkaufs- und/oder Präsentationssystem (1) nach einem der vorhergehenden Ansprüche, **dadurch gekennzeichnet, dass** ein Quellgerät (29) mit einer CPU mit auf einem Speicherelement abgelegten Bilddaten ausgebildet ist.

9. Verkaufs- und/oder Präsentationssystem (1) nach Anspruch 8, **dadurch gekennzeichnet, dass** das mit CPU ausgebildete Quellgerät (29) mit einem Server (52) verbunden ist, über den eine Aktualisierung von Bilddaten und/oder Betriebsformen ermöglicht ist.

10. Verkaufs- und/oder Präsentationssystem (1) nach Anspruch 9, **dadurch gekennzeichnet, dass** der Server (52) in ein Netzwerk (53) eingebunden ist.

11. Verkaufs- und/oder Präsentationssystem (1) nach einem der vorhergehenden Ansprüche, **dadurch gekennzeichnet, dass** mehrere Quellgeräte (26-29) denselben Signalgegenstand betreffende Bildsignale erzeugen, die aber unterschiedliche Qualitäten aufweisen.

12. Verkaufs- und/oder Präsentationssystem (1) nach einem der vorhergehenden Ansprüche, **dadurch gekennzeichnet, dass** die mehreren Quellgeräte (26-29) die denselben Signalgegenstand betreffenden Bildsignale synchronisiert erzeugen.

13. Verkaufs- und/oder Präsentationssystem nach einem der vorhergehenden Ansprüche, **dadurch gekennzeichnet, dass** mindestens ein Quellgerät (26-28) als Abspielgerät für einen Film ausgebildet ist, während mindestens ein weiteres Quellgerät (29), vorzugsweise ein Quellgerät mit einer CPU, ein Werbesignal, insbesondere einen Werbetext, eine oder mehrere Grafiken oder eine Animation, erzeugt.

14. Verkaufs- und/oder Präsentationssystem (1) nach einem der vorhergehenden Ansprüche, **dadurch gekennzeichnet, dass** mindestens eine Bedieneinheit (31) im Bereich eines Bildschirmes (2-11) oder einer Gruppe (12; 13; 14; 34) der Bildschirme angeordnet ist.

15. Verkaufs- und/oder Präsentationssystem (1) nach einem der vorhergehenden Ansprüche, **dadurch gekennzeichnet, dass** im Bereich eines Bildschirmes (2-11) oder der Gruppe (12; 13; 114; 34) der Bildschirme ein Erfassungsorgan angeordnet ist, welches die Annäherung eines Kunden an den Bildschirm (2-11) oder die Gruppe (12; 13; 114; 34) der Bildschirme erfasst, wobei in der Verteileinrichtung (35) unter Berücksichtigung des Signales des Erfassungsorgans eine Veränderung der Versorgung einer Gruppe (12; 13; 14; 34) der Bildschirme von einem Quellgerät (26) auf eine Versorgung dieser Gruppe (12; 13; 14; 34) der Bildschirme von einem anderen Quellgerät (27 - 29) herbeiführbar ist.

16. Verkaufs- und/oder Präsentationssystem nach einem der vorhergehenden Ansprüche, **dadurch gekennzeichnet, dass** die Verteileinrichtung (35) als HDMI-Matrix ausgebildet ist.

17. Verwendung eines Netzwerkes mit
a) mehreren Bildschirmen (2-11),
b) mehreren Quellgeräten (26-29), die einer Ausgabe von Bildsignalen dienen,
c) mindestens einer Verteileinrichtung (35), über die die Bildsignale der Quellgeräte (26-29) selektiv den Bildschirmen (2-11) zuführbar sind,
d) mindestens einer mit der Verteileinrichtung (35) kommunizierenden Regeleinheit oder Bedieneinheit (31), über die die Zuführung der Bildsignale von mindestens einem Quellgerät (26-29) zu einem Bildschirm (2-11) auf eine alternative oder kumulative Zuführung zu einem anderen Bildschirm (2-11)) veränderbar ist,
für ein Verkaufs- und/oder Präsentationssystem (1) für Waren und/oder Dienstleistungen in einem Warenhaus, insbesondere eine Verkaufsabteilung für Fernsehgeräte, oder in einer Präsentationseinrichtung, wobei
e) die Bildschirme (2-11) einzelnen Gruppen (12; 13; 14; 34) zugeordnet sind und zumindest eine Gruppe (12; 13; 14)) mindestens zwei Bildschirme (2, 3, 4, 5; 6, 7; 8, 9, 10) aufweist und
f) über die Verteileinrichtung (35) die Bildsignale der Quellgeräte (26-29) selektiv den Gruppen (12; 13; 14; 34) der Bildschirme zuführbar sind,
g) über die mindestens eine Verteileinrichtung (35) gleichzeitig Bildsignale unterschiedlicher Quellgeräte (26-29) unterschiedlichen Gruppen (12, 13, 14, 34) der Bildschirme (2 - 11) zuführbar sind oder zugeführt werden,
h) über die Bedieneinheit (31) oder Regeleinheit die Zuführung der Bildsignale von mindestens einem Quellgerät (26-29) zu einer Gruppe (12; 13; 14; 34) der Bildschirme auf eine alternative oder kumulative Zuführung zu einer anderen Gruppe (12; 13; 14; 34) der Bildschirme veränderbar ist.
